# EUROPÄISCHE PATENTSCHRIFT

(11) **EP 2 111 946 B1**
(45) Veröffentlichungstag und Bekanntmachung des Hinweises auf die Patenterteilung: **30.03.2011**
(21) Anmeldenummer: 09005770.4
(22) Anmeldetag: 24.04.2009
(51) Int. Cl.: B23Q 17/00, B23B 31/26

(54) **Spannvorrichtung zum Einspannen einer Werkzeugeinheit**
Tensioning device for tensioning a tool unit
Dispositif de serrage destiné au serrage d'une unité d'outil

(30) Priorität: 25.04.2008 DE 202008005749 U
(43) Veröffentlichungstag der Anmeldung: 28.10.2009
(73) Patentinhaber: DMG Microset GmbH, 33689 Bielefeld (DE)
(72) Erfinder: Schwikowski, Manfred, 33334 Gütersloh (DE)
(74) Vertreter: TER MEER - STEINMEISTER & PARTNER GbR

(56) Entgegenhaltungen:
- DE-A1- 4 201 013
- DE-T2-602004 002 223
- DE-U1-202005 011 735

## Beschreibung

Die vorliegende Erfindung betrifft eine Spannvorrichtung zum Einspannen einer Werkzeugeinheit, gemäß dem Oberbegriff des Anspruchs 1.

Eine derartige Spannvorrichtung ist aus der deutschen Offenlegungsschrift DE 42 01 013 A1 bekannt.

Derartige Spannvorrichtungen sind beispielsweise an Werkzeug-Voreinstellgeräten zu finden, in denen ein Werkzeug vor der Verwendung in einer Materialbearbeitungsmaschine vermessen bzw. eingerichtet wird. In der Regel ist das eigentliche Werkzeug in einem Adapter gehalten, der in die Öffnung einer Aufnahme der Spannvorrichtung einführbar ist und in dieser mittels eines Spannorgans arretiert wird. Im Sprachgebrauch der vorliegenden Anmeldung umfasst der Begriff Werkzeugeinheit daher nicht ausschließlich das Werkzeug selbst, sondern auch die gesamte Einheit aus Werkzeug und einem daran angebrachten Adapter oder dergleichen.

Zur Einrichtung des Werkzeugs muss zunächst die Werkzeugeinheit in die Aufnahme eingebracht, in dieser ausgerichtet und fest verspannt werden. Dieser Vorgang ist insbesondere dann umständlich, wenn die Werkzeugeinheit sehr schwer ist und mit beiden Hände getragen werden muss. Die bekannten Spannorgane sind manuell über einen Taster oder Schalter zu bedienen, so dass die gleichzeitige Positionierung der Werkzeugeinheit und die Aktivierung des Spannorgans nicht durch eine einzige Bedienungsperson durchgeführt werden können. Besonders problematisch ist die Handhabung einer schwerer Werkzeugeinheit, wenn deren Längsachse horizontal in die Aufnahme eingeführt werden soll. Das Halten des vollen Gewichts der Einheit und die Betätigung des Spannorgans sind dann nicht gleichzeitig möglich.

Aufgabe der vorliegenden Erfindung ist es daher, eine Spannvorrichtung der eingangs genannten Art zu schaffen, die es einer einzigen Bedienungsperson ermöglicht, eine Werkzeugeinheit mit hohem Gewicht wunschgemäß in der Aufnahme zu positionieren und problemlos einzuspannen.

Diese Aufgabe wird erfindungsgemäß durch eine Spannvorrichtung mit den Merkmalen des Anspruchs 1 gelöst.

Erfindungsgemäß wird das Erreichen einer bestimmten Position der Werkzeugeinheit in oder an der Aufnahme durch einen Sensor angezeigt, der ein Aktivierungssignal erzeugt, das an das Spannorgan abgegeben wird. Dieses arretiert daraufhin die Werkzeugeinheit in der Öffnung.

Zum Einspannen genügt es demnach, die Werkzeugeinheit korrekt in der Aufnahme zu positionieren. Da das Spannorgan dann automatisch ausgelöst wird und nicht mehr manuell bedient werden muss, kann der gesamte Einspannvorgang von einer einzigen Bedienungsperson bequern vorgenommen werden, selbst dann, wenn zum Tragen der Werkzeugeinheit beide Hände benötigt werden.

In einer bevorzugten Ausführungsform ist der Sensor als Näherungssensor ausgebildet, der das Aktivierungssignal erzeugt, wenn ein vorbestimmter Abstand zwischen der Werkzeugeinheit und dem Sensor unterschritten wird.

Das Spannorgan arretiert die Werkzeugeinheit in diesem Fall dann, wenn die Werkzeugeinheit sich nahe genug an der Aufnahme bzw, weit genug in der Öffnung befindet.

In weiteren bevorzugten Ausführungsformen kann der Sensor als induktiver Sensor, als kapazitiver Sensor oder als optischer Sensor ausgebildet sein.

Weiter vorzugsweise kann der Sensor als Kontaktsensor ausgebildet sein, der bei Kontakt der Werkzeugeinheit mit dem Sensor das Aktivierungssignal für das Spannorgan erzeugt.

In einer weiteren bevorzugten Ausführungsform ist der Sensor dazu vorgesehen, die Werkzeugeinheit zu identifizieren.

Demnach registriert der Sensor nicht nur die Aufnahmeposition, sondern identifiziert den Typ und/oder die Kennung des Exemplars des Werkzeugs. Das Werkzeug kann durch geeignete Mittel kodiert sein, wie etwa durch einen optisch lesbaren Barcode, einen RFID-Chip, einen mit elektrischen Kontakten versehenen Chip oder dergleichen mehr.

Vorzugsweise ist die Öffnung der Aufnahme von einem Flanschbereich umgeben, und der Sensor ist in die Oberfläche des Flanschbereichs neben der Öffnung eingesetzt.

Beispielsweise kann der Flanschbereich als Anschlag beim Einsetzen der Werkzeugeinheit dienen. In der angeschlagenen Position berührt dann der Sensor eine entsprechende Anschlagsfläche der Werkzeugeinheit und gibt daraufhin das Aktivierungssignal an das Spannorgan ab. Denkbar ist natürlich auch in diesem Zusammenhang, den Sensor als Näherungssensor auszubilden, der eine entsprechende Annäherung der Werkzeugeinheit an den Flanschbereich registriert.

Vorzugsweise umfasst das Spannorgan einen Greifer, der an der Aufnahme zum Erfassen des in die Öffnung eingeführten Endes der Werkzeugeinheit vorgesehen ist. Beispielsweise kann das untere Ende der Werkzeugeinheit als Adapter mit einem Anzugsbolzen ausgebildet sein, an welchem der Greifer angreift und die Werkzeugeinheit in die Öffnung einzieht.

In einer bevorzugten Ausführungsform ist der Greifer zum Anziehen der Werkzeugeinheit in die Aufnahme beweglich.

Weiter vorzugsweise umfasst das Spannorgan Mittel zur Erzeugung eines Unterdrucks in der Öffnung der Aufnahme.

In diesem Fall wird die Werkzeugeinheit also nicht mechanisch erfasst, sondern durch Unterdruckanschlüsse oder dergleichen in die Öffnung bzw. an den ggf. vorhandenen Flanschbereich an der Aufnahme angesaugt.

Vorzugsweise ist die Spanneinheit durch ein Signal einer Eingabeeinrichtung zum Lösen der Arretierung der Werkzeugeinheit deaktivierbar.

Die Deaktivierung zum Lösen der Werkzeugeinheit kann demnach manuell. durch Spracheingabe oder dergleichen erfolgen. Ist das Spannorgan deaktiviert, kann die Werkzeugeinheit bequem entnommen werden.

Gemäß bevorzugten Ausführungsformen kann die Eingabeeinrichtung entweder als Taster oder Schalter ausgebildet sein oder sprachgesteuert sein.

Vorzugsweise ist das Spannorgan dazu vorgesehen, nach Ablauf eines vorbestimmten Zeitraums nach einer Deaktivierung der Spanneinheit im eingesetzten Zustand der Werkzeugeinheit in die Aufnahme das Spannorgan erneut selbsttätig zu aktivieren.

Der Sinn dieser Konstruktion besteht darin, die Werkzeugeinheit nicht über einen längeren Zeitraum im nicht eingespannten Zustand in der Aufnahme zu belassen. Wird daher das Spannorgan deaktiviert und befindet sich die Werkzeugeinheit nach längerer Zeit immer noch lose in der Aufnahme, spannt sich das Spannorgan automatisch von selbst wieder an und hält die Werkzeugeinheit fest. Diese Ausführungsform ist aus Gründen der Betriebssicherheit vorteilhaft.

Im folgenden wird eine bevorzugte Ausführungsform der vorliegenden Erfindung anhand der Zeichnungen näher erläutert.

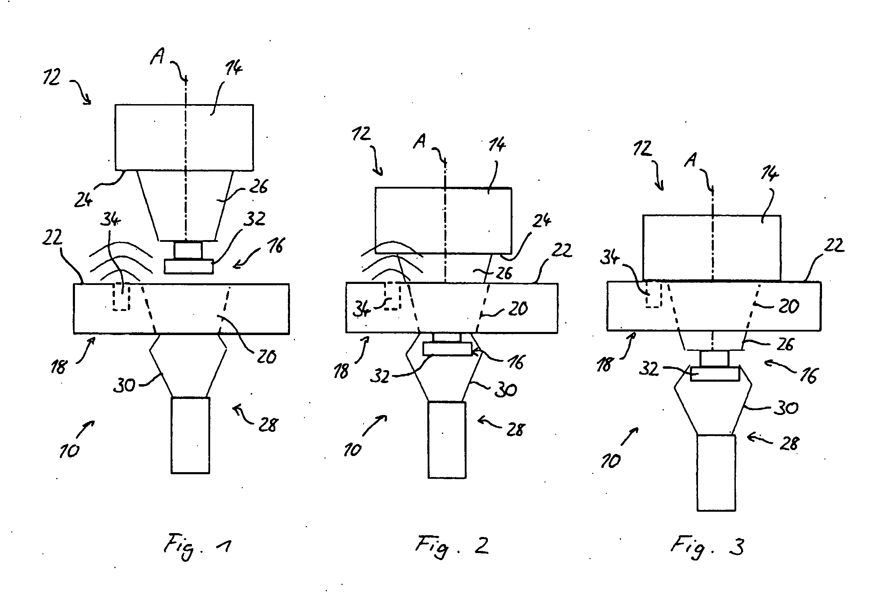

- Fig. 1 bis 3: sind schematische Seitenansichten einer Ausführungs- form der erfindungsgemäßen Spannvorrichtung, in denen sich die Werkzeugeinheit in verschiedenen Ein- satzpositionen befindet.

Die in Fig. 1 dargestellte Spannvorrichtung 10 dient zum Einspannen einer Werkzeugeinheit 12, die ein nicht näher dargestelltes Werkzeug umfasst, das in einem Werkzeug-Voreinstellgerät eingerichtet werden soll. In den Figuren ist von der Werkzeugeinheit 12 lediglich ein Adapter 14 erkennbar, dessen unteres Ende 16 zur Einführung in die Spannvorrichtung 10 vorgesehen ist. Die Spannvorrichtung 10 selbst ist Bestandteil des erwähnten Werkzeug-Voreinstellgerätes, dessen nähere Einzelheiten hier der Übersichtlichkeit halber nicht dargestellt sind.

Die Spannvorrichtung 10 umfasst eine allgemein mit 18 bezeichnete Aufnahme für die Werkzeugeinheit 12. Etwa in ihrer Mitte weist die Aufnahme 18 eine kegelstumpfförmige Durchgangsöffnung 20 auf, in welche das Ende 16 der Werkzeugeinheit 12 einführbar ist. Die jeweiligen Formen der Öffnung 20 und des zur Einführung vorgesehenen Endes 16 der Werkzeugeinheit 12 sind derart aneinander angepasst, dass der Adapter 14 im eingesetzten Zustand ohne Spiel in der Aufnahme 18 sitzt.

Der Adapter 14 ist im wesentlichen rotationssymmetrisch um seine Längsachse A ausgebildet. Zur Einführung in die Spannvorrichtung 10 wird der Adapter 14 entlang dieser Längsachse A in die Öffnung 20 eingeführt. In den Figuren steht die Längsachse A senkrecht, und der Adapter 14 wird von oben in die Öffnung 20 eingesetzt. Denkbar ist jedoch eine andere Ausrichtung, bei welcher beispielsweise die Längsachse A horizontal steht und die Werkzeugeinheit 12 mit dem Adapter 14 seitlich in die Öffnung 20 eingesetzt werden muss.

Um die Öffnung 20 herum weist die Aufnahme 18 einen flachen, ringförmigen Flanschbereich 22 auf. Dieser Flanschbereich 22 dient im eingesetzten Zustand der Werkzeugeinheit 12 als Anschlag für einen ebenfalls ringförmigen unteren Anschlagsbereich 24 am Adapter 14, der oberhalb eines kegelstumpfförmigen Abschnitts 26 vorgesehen ist, der in die Öffnung 20 einführbar ist. Die Werkzeugeinheit 12 stützt sich dann nicht nur auf ihrem unteren kegelstumpfförmigen Ende, sondern auch auf der Abstufung des Anschlagsbereichs 24 auf, der dann auf dem Flanschbereich 22 aufliegt.

Unterhalb der Öffnung 20 weist die Spannvorrichtung ein Spannorgan 28 auf, das einen mechanischen Greifer 30 umfasst. Wird der Greifer 30 aktiviert. schließt er sich und ergreift einen Anzugsbolzen 32, der am unteren Ende 16 der Werkzeugeinheit 12 vorgesehen ist. Der Greifer 30 kann dann zusammen mit der ergriffenen Werkzeugeinheit 12 nach unten bewegt werden, so dass die Werkzeugeinheit 12 in die Öffnung 20 eingezogen wird. Hierdurch wird die Werkzeugeinheit 12 in der Aufnahme 18 arretiert. Dieser arretierte Zustand ist in Fig. 3 dargestellt. Hierbei kann eine gewisse Spannung vom Greifer 30 nach unten am Anzugsbolzen 32 ausgeübt werden, so dass die Anschlagsfläche 24 der Werkzeugeinheit 12 fest an den Flanschbereich 22 angezogen wird. Fig. 2 zeigt eine Zwischenstellung, in der der Greifer 30 bereits den Anzugsbolzen 32 erfasst hat, jedoch noch nicht nach unten bewegt worden ist.

Das Spannorgan 28 kann auch auf andere Weise ausgebildet sein und zum Beispiel Mittel zur Erzeugung eines Unterdrucks in der Öffnung 20 umfassen. In diesem Fall wird der kegelstumpfförmige Abschnitt 26 des Adapters 14 in die Öffnung 20 eingesaugt, so dass die Werkzeugeinheit 12 unbeweglich in der Aufnahme 18 gehalten wird.

Erfindungsgemäß ist in die Oberfläche des Flanschbereichs 22 in unmittelbarer Nähe der Öffnung 20 ein Sensor 34 eingelassen. Bei diesem handelt es sich nur um einen Näherungssensor, d.h., der Sensor ist in der Lage, den Abstand zu einem über dem Sensor 34 angeordneten Gegenstand zu bestimmen. Im vorliegenden Fall misst der Sensor 34 den Abstand zwischen dem Sensor 34 bzw. der Oberfläche des Flanschbereichs 22 und dem Anschlagsbereich 24 des Adapters 14. Wird ein vorbestimmter Abstand unterschritten, erzeugt der Sensor 34 ein Signal zur Aktivierung des Spannorgans 28, welches daraufhin die Werkzeugeinheit 12 in der Aufnahme 18 arretiert.

Dies in Fig. 2 näher dargestellt. In dem Moment, in welchem ein vorbestimmter Abstand zwischen dem Flanschbereich 22 und dem Anschlagsbereich 24 unterschritten wurde, hat der Sensor 34 das Aktivierungssignal an das Spannorgan 28 übermittelt, welches daraufhin den Greifer 30 geschlossen hat. Dieser bewegt sich anschließend nach unten und zieht den Adapter 14 in die Öffnung 20 der Aufnahme 18, bis der Anschlagsbereich 24 am Flanschbereich 22 anschlägt (Fig. 3). Die Werkzeugeinheit 12 ist dann sicher in der Aufnahme 18 arretiert.

Das Erreichen eines vorbestimmten Abstands zwischen Werkzeugeinheit 12 und Sensor 34 ist lediglich ein Beispiel für eine vorbestimmte Position der Werkzeugeinheit 12 in Bezug auf die Aufnahme 18, in welcher das Spannorgan 28 aktiviert wird. Alternativ zu der hier beschriebenen Funktionsweise ist es möglich, das Spannorgan 28 erst dann zu aktivieren, wenn die Werkzeugeinheit 12 vollständig in die Aufnahme 18 eingesetzt ist, so dass das Spannorgan 28 lediglich Sicherung der aktuellen Position aktiviert werden muss. Die Position, in welcher das Aktivierungssignal erzeugt wird, ist dann identisch mit der gewünschten Endposition der Werkzeugeinheit 12. Bei der in den Fig. 1 bis 3 beschriebenen Ausführungsform ist die Aufnahmeposition in Fig. 2, in der vom Sensor 34 das Aktivierungssignal erzeugt wird, nicht mit der Endposition in Fig. 3 identisch. Hier muss zunächst in Fig. 2 der Greifer 30 aktiviert werden und die Werkzeugeinheit 12 nach unten in die Öffnung 20 ziehen, wie vorstehend bereits beschrieben.

Der Sensor kann beispielsweise als induktiver Sensor oder als kapazitiver Sensor ausgebildet sein. Möglich ist auch die Verwendung eines optischen Sensors. Soll die Aktivierung des Spannorgans 28 erst in der Endposition der Werkzeugeinheit 12 erfolgen. kann der Sensor auch als Kontaktsensor ausgebildet sein, der bei Kontakt der Werkzeugeinheit 12, z.B. der Anschlagsfläche 24 mit dem Sensor 34 das Aktivierungssignal erzeugt.

Optional kann der Sensor auch dazu vorgesehen sein, nicht nur die Position der Werkzeugeinheit 12, sondern auch deren Typ zu identifizieren. Zu diesem Zweck kann die Werkzeugeinheit 12 entsprechend codiert sein, beispielsweise mit Hilfe eines RFID-Chips, eines optisch lesbaren Strichcodes oder dergleichen, je nach Art des verwendeten Sensors 34, der dazu in der Lage sein muss, die Codierung bei Annäherung der Werkzeugeinheit 12 auszulesen. Denkbar ist auch, den Adapter 14 mit einem Chip mit elektrischen freien Kontakten zu versehen, die in der vollständig eingesetzten Position der Werkzeugeinheit 12 vom Sensor 34 berührt werden. Es ist auch möglich, jede einzelne Werkzeugeinheit 12 als Einzelstück zu codieren. Die Spannvorrichtung 10 kann dann einzelne Exemplare von Werkzeugeinheiten 12 identifizieren und unterscheiden.

Zum Lösen der Arretierung der Werkzeugeinheit 12 kann das Spannorgan 28 ein entsprechendes Signal einer Eingabeeinrichtung aufnehmen. Diese Eingabeeinrichtung kann beispielsweise als manuell oder mit einem Fuß bedienbarer Taster oder Schalter ausgebildet sein oder sprachgesteuert sein. Dementsprechend wird je nach Ausbildung der Eingabeeinrichtung auf einen Tastendruck oder einen Sprachbefehl hin ein Deaktivierungssignal erzeugt, das vom Spannorgan aufgenommen wird, welches daraufhin die Arretierung der Werkzeugeinheit 12 löst. Letztere kann dann frei aus der Öffnung 20 entnommen werden.

Zur Erhöhung der Betriebssicherheit kann vorgesehen sein, dass sich das Spannorgan 28 selbsttätig wieder aktiviert, wenn sich nach Ablauf eines vorbestimmten Zeitraums nach einer Deaktivierung des Spannorgans 28 die Werkzeugeinheit 12 immer noch im eingesetzten Zustand in der Öffnung 20 befindet. Auf diese Weise soll vermieden werden, dass eine Bedienungsperson irrtümlich Operationen an der Werkzeug-Voreinstellvorrichtung vornimmt, die eine Arretierung voraussetzen, während die Werkzeugeinheit 12 nur lose in der Aufnahme 18 einliegt. Demnach wird nach Lösen der Arretierung ein bestimmtes Zeitfenster geöffnet, in welcher die Werkzeugeinheit 12 zu entnehmen ist. Nach Überschreiten dieses Zeitfensters wird das Spannorgan 28 erneut aktiviert, so dass der arretierte Zustand wieder aufrecht erhalten wird.

## Patentansprüche

1. Spannvorrichtung (10) zum Einspannen einer Werkzeugeinheit (12), mit einer Aufnahme (18), die mit einer Öffnung (20) versehen ist, in welche ein Ende (16) der Werkzeugeinheit (12) einführbar ist, und einem an der Öffnung (20) angeordneten Spannorgan (28) zur Arretierung der Werkzeugeinheit (12) in der Aufnahme (18), sowie mit einem Sensor (34), der bei Erreichen einer bestimmten Position der Werkzeugeinheit (12) in bzw, an der Aufnahme (18) ein Signal erzeugt, **dadurch gekennzeichnet, dass** der Sensor (34) als Näherungssensor ausgebildet ist, der ein Aktivierungssignal erzeugt, durch welches das Spannorgan (28) zum Arretieren der Werkzeugeinheit (12) aktiviert wird, wenn ein vorbestimmter Abstand zwischen der Werkzeugeinheit (12) und dem Sensor (34) unterschritten wird.
und dass das Spannorgan (28) einen Greifer (30) umfasst, der an der Aufnahme (18) zum Erfassen des in die Öffnung (20) eingeführten Endes (16) der Werkzeugeinheit (12) vorgesehen ist, welcher Greifer zum Anziehen der Werkzeugeinheit (12) in die Aufnahme (18) beweglich ist.

2. Spannvorrichtung (10) gemäß Anspruch 1. **dadurch gekennzeichnet, dass** der Sensor (34) als induktiver Sensor ausgebildet ist.

3. Spannvorrichtung (10) gemäß Anspruch 1, **dadurch gekennzeichnet, dass** der Sensor (34) als kapazitiver Sensor ausgebildet ist.

4. Spannvorrichtung (10) gemäß Anspruch 1, **dadurch gekennzeichnet, dass** der Sensor (34) als optischer Sensor ausgebildet ist.

5. Spannvorrichtung (10) gemäß Anspruch 1, **dadurch gekennzeichnet, dass** der Sensor (34) als Kontaktsensor ausgebildet ist, der bei Kontakt der Werkzeugeinheit (12) mit dem Sensor (34) das Aktivierungssignal erzeugt.

6. Spannvorrichtung (10) gemäß einem der vorhergehenden Ansprüche, **dadurch gekennzeichnet, dass** der Sensor (34) dazu vorgesehen ist, die Werkzeugeinheit (12) zu identifizieren.

7. Spannvorrichtung (10) gemäß einem der vorhergehenden Ansprüche, **dadurch gekennzeichnet, dass** die Öffnung (20) der Aufnahme (18) von einem Flanschbereich (22) umgeben ist, und dass der Sensor (34) in die Oberfläche des Flanschbereichs (22) neben der Öffnung (20) eingesetzt ist.

8. Spannvorrichtung (10) gemäß einem der vorhergehenden Ansprüche, **dadurch gekennzeichnet, dass** das Spannorgan (28) Mittel zur Erzeugung eines Unterdrucks in der Öffnung (20) der Aufnahme (18) umfasst.

9. Spannvorrichtung (10) gemäß einem der vorhergehenden Ansprüche, **dadurch gekennzeichnet, dass** das Spannorgan (28) durch ein Signal einer Eingabeeinrichtung zum Lösen der Arretierung der Werkzeugeinheit (12) deaktivierbar ist.

10. Spannvorrichtung (10) gemäß Anspruch 9, **dadurch gekennzeichnet, dass** die Eingabeeinrichtung als Taster oder Schalter ausgebildet ist.

11. Spannvorrichtung (10) gemäß Anspruch 9, **dadurch gekennzeichnet, dass** die Eingabeeinrichtung sprachgesteuert ist.

12. Spannvorrichtung (10) gemäß einem der vorhergehenden Ansprüche, **dadurch gekennzeichnet, dass** die Spannvorrichtung (10) dazu vorgesehen ist, nach Ablauf eines vorbestimmten Zeitraumes nach einer Deaktivierung des Spannorgans (28) im eingesetzten Zustand der Werkzeugeinheit (12) in die Aufnahme (18) des Spannorgans (28) erneut selbsttätig zu aktivieren.

## Claims

1. Tensioning device (10) for tensioning a tool unit (12), comprising a reception (18) with an opening (20) into which one end (16) of the tool unit (12) is insertable, and further comprising a tensioning member (28) provided at the opening (20) for fixing the tool unit (12) within the reception (18), and a sensor (34) for generating a signal when the tool unit (12) has reached a predetermined position in or at the reception (18), respectively, **characterized in that** said sensor (34) is provided as a proximity sensor for generating an activation signal for activating the tensioning member (28) to fix the tool unit (12) when the distance between the tool unit (12) and the sensor (34) falls below a predetermined distance,
said tensioning member (28) comprising a gripper (30) arranged at the reception (18) for gripping the end (16) of the tool unit (12) that is inserted into the opening (20), said gripper being moveable for pulling the tool unit (12) into the reception (18).

2. Tensioning device (10) according to claim 1, **characterized in that** said sensor (34) is an inductive sensor.

3. Tensioning device (10) according to claim 1, **characterized in that** said sensor (34) is a capacitive sensor.

4. Tensioning device (10) according to claim 1, **characterized in that** said sensor (34) is an optical sensor.

5. Tensioning device (10) according to claim 1, **characterized in that** said sensor (34) is a contact sensor that generates the activation signal when the tool unit (12) contacts the sensor (34).

6. Tensioning device (10) according to one of the preceding claims, **characterized in that** said sensor (34) is provided to identify the tool unit (12).

7. Tensioning device (10) according to one of the preceding claims, **characterized in that** said opening (20) of the reception (18) is surrounded by a flange portion (22) and that said sensor (34) is inserted into the surface of the flange portion (22) adjacent to the opening (20).

8. Tensioning device (10) according to one of the preceding claims, **characterized in that** said tensioning member (28) comprises means for generating an underpressure within the opening (20) of the reception (18).

9. Tensioning device (10) according to one of the preceding claims, **characterized in that** said tensioning member (28) is provided to be deactivated by a signal of an input device for realizing the fixing of the tool unit (12).

10. Tensioning device (10) according to claim 9, **characterized in that** said input device is provided as a push button or a switch.

11. Tensioning device (10) according to claim 9, **characterized in that** said input device is voice controlled.

12. Tensioning device (10) according to one of the preceding claims, **characterized in that** said tensioning device (10) is provided to be reactivated automatically after passing a predetermined time period after deactivating the tensioning member (28) in the inserted state of the tool unit (12) within the reception (18) of the tensioning member (28).

## Revendications

1. Dispositif de serrage (10) pour serrer une unité d'outil (12), comportant un porte-outil (18) muni d'une ouverture (20) dans laquelle une extrémité (16) de l'unité d'outil (12) peut être introduite, et un organe de serrage (28) agencé sur l'ouverture (20) de manière à bloquer l'unité d'outil (12) dans le porte-outil (18), ainsi qu'un capteur (34) qui génère un signal lorsqu'une position déterminée de l'unité d'outil (12) dans ou sur le porte-outil (18) est atteinte, **caractérisé en ce que** le capteur (34) est conçu sous la forme d'un capteur de proximité qui génère un signal d'activation au moyen duquel l'organe de serrage (28) est activé pour bloquer l'unité d'outil (12) lorsqu'une distance prédéterminée entre l'unité d'outil (12) et le capteur (34) est dépassée,
et **en ce que** l'organe de serrage (28) inclut un élément de prise (30) qui est prévu sur le porte-outil (18) pour détecter l'extrémité (16) introduite dans l'ouverture (20) de l'unité d'outil (12), lequel élément de prise est mobile dans le porte-outil (18) pour mettre l'unité d'outil (12) sous tension.

2. Dispositif de serrage (10) selon la revendication 1, **caractérisé en ce que** le capteur (34) est conçu sous la forme d'un capteur inductif.

3. Dispositif de serrage (10) selon la revendication 1, **caractérisé en ce que** le capteur (34) est conçu sous la forme d'un capteur capacitif.

4. Dispositif de serrage (10) selon la revendication 1, **caractérisé en ce que** le capteur (34) est conçu sous la forme d'un capteur optique.

5. Dispositif de serrage (10) selon la revendication 1, **caractérisé en ce que** le capteur (34) est conçu sous la forme d'un capteur à contact qui génère le signal d'activation lorsque l'unité d'outil (12) entre en contact avec le capteur (34).

6. Dispositif de serrage (10) selon l'une quelconque des revendications précédentes, **caractérisé en ce que** le capteur (34) est destiné à identifier l'unité d'outil (12).

7. Dispositif de serrage (10) selon l'une quelconque des revendications précédentes, **caractérisé en ce que** l'ouverture (20) du porte-outil (18) est entourée d'une zone de bride (22), et **en ce que** le capteur (34) est placé dans la surface de la zone de bride (22) à côté de l'ouverture (20).

8. Dispositif de serrage (10) selon l'une quelconque des revendications précédentes, **caractérisé en ce que** l'organe de serrage (28) inclut des moyens pour générer une pression négative dans l'ouverture (20) du porte-outil (18)

9. Dispositif de serrage (10) selon l'une quelconque des revendications précédentes, **caractérisé en ce que** l'organe de serrage (28) peut être désactivé par un signal d'un dispositif d'entrée afin de débloquer l'unité d'outil (12).

10. Dispositif de serrage (10) selon la revendication 9, **caractérisé en ce que** le dispositif d'entrée est conçu sous la forme d'une touche ou d'un commutateur.

11. Dispositif de serrage (10) selon la revendication 9, **caractérisé en ce que** le dispositif d'entrée est commandé par la voix.

12. Dispositif de serrage (10) selon l'une quelconque des revendications précédentes, **caractérisé en ce que** le dispositif de serrage (10) est destiné à se réactiver automatiquement après expiration d'une période de temps prédéterminée après une désactivation de l'organe de serrage (28) lorsque l'unité d'outil (12) est à l'état monté dans le porte-outil (18) de l'organe de serrage (28).
